(19) Europäisches Patentamt
European Patent Office
Office européen des brevets

(11) **EP 3 628 958 B1**

(12) **FASCICULE DE BREVET EUROPEEN**

(45) Date de publication et mention de la délivrance du brevet:
**05.05.2021 Bulletin 2021/18**

(51) Int Cl.:
***F28D 20/02*** *(2006.01)*

(21) Numéro de dépôt: **19198059.8**

(22) Date de dépôt: **18.09.2019**

(54) **SYSTÈMES DE STOCKAGE THERMIQUE (SST) PAR MATÉRIAUX À CHANGEMENT DE PHASE (MCP), COMPRENANT UN DISPOSITIF D'ÉVALUATION DE LA CHARGE DU SST**

WÄRMESPEICHERSYSTEM MIT PHASENWECHSELMATERIALEN (PCM), DAS EINE EVALUIERUNGSVORRICHTUNG DER LADUNG DES WÄRMESPEICHERSYSTEMS UMFASST

THERMAL STORAGE SYSTEMS (TSS) BY PHASE CHANGE MATERIALS (PCM) COMPRISING A DEVICE FOR EVALUATING THE TSS LOAD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.09.2018 FR 1858907**

(43) Date de publication de la demande:
**01.04.2020 Bulletin 2020/14**

(73) Titulaire: **Commissariat à l'Energie Atomique et aux Energies Alternatives
75015 Paris (FR)**

(72) Inventeurs:
• **VESIN, Sébastien
  38054 GRENOBLE Cedex 9 (FR)**
• **MATRINGE, Gilles
  38054 GRENOBLE Cedex 9 (FR)**

(74) Mandataire: **Brizio Delaporte, Allison
  Cabinet Hautier
  20, rue de la Liberté
  06000 Nice (FR)**

(56) Documents cités:
**EP-A1- 3 312 539      EP-A2- 2 482 021
CH-A5- 648 412       DE-U1-202012 103 715
US-A- 5 526 683**

**Description**

DOMAINE TECHNIQUE DE L'INVENTION

La présente invention concerne les Systèmes de Stockage Thermique (SST) par Matériaux à Changement de Phase (MCP), et plus particulièrement, un dispositif permettant d'évaluer l'état de charge du SST.

La présente invention concerne plus particulièrement un SST par MCP comprenant une cuve destinée à contenir un MCP par fusion/solidification et au moins un dispositif d'évaluation de la charge du SST.

La présente invention trouvera son application dans les réseaux de chaleur et/ou de froid, urbains, ruraux ou industriels ainsi que dans le stockage de l'énergie solaire. L'invention pourra également trouver des applications dans l'habitat, le transport thermique hors réseaux (camions, bateaux...) et le management thermique de systèmes embarqués.

ÉTAT DE LA TECHNIQUE

Il existe plusieurs dispositifs de mesure permettant d'évaluer le niveau de charge d'un SST par MCP en exploitant et interprétant un même phénomène physique, à savoir la variation volumique du MCP lors de son changement d'état, cette variation volumique étant inhérente à une différence entre une masse volumique du MCP en phase liquide et une masse volumique du MCP en phase solide.

À titre d'exemple, parmi ces dispositifs de mesure, celui décrit dans la publication de G. Steinmaurer et al. du laboratoire autrichien ASiC, intitulée «Development of sensors for measuring the enthalpy of PCM storage systems», suggère de mesurer la variation de pression dans le ciel de gaz, cette variation étant inhérente à une variation volumique du MCP dans le réservoir du SST.

Un dispositif de mesure plus élaboré est décrit dans le document EP2482021 A2 qui propose d'évaluer le niveau de charge du SST en mesurant l'évolution de la pression statique du ciel de gaz après un balayage forcé en pression. Chaque balayage consiste à injecter, dans la cuve du SST grâce à une pompe, une même quantité de gaz et à mesurer la pression statique du ciel de gaz obtenue en réponse à cette injection. Cette mesure sera différente suivant le volume du ciel de gaz avant injection ; or ce volume est conditionné par la fraction entre le volume de MCP en phase liquide et le volume de MCP en phase solide au sein de la cuve et donc par l'état de charge du SST.

En pratique, une étanchéité suffisante de la cuve est requise, pour que la pression mesurée par le manomètre, et donc directement l'interprétation du niveau de charge ne soit pas affectée par un niveau trop significatif de fuite de gaz. Il est donc nécessaire d'apporter un soin particulier à la conception et à la réalisation des soudures et des assemblages mécaniques de la cuve, et en particulier de sa partie confinant le ciel de gaz, cette partie étant en sus souvent instrumentée.

Un autre problème, lié au précédent, concerne la montée en pression du ciel de gaz consécutivement à un changement de phase du MCP. À titre d'exemple, pour un SST pourvu d'une calandre close de 3 m de haut, contenant un ciel de gaz d'une hauteur de 100 mm et exploitant un MCP qui présente une expansion volumique de 15 % lors de son changement de phase, la pression dans le ciel de gaz pourra s'élever à 4 bars. Le SST, et plus particulièrement sa cuve, doit donc être dimensionné, conçu et qualifié pour supporter des montées en pression significatives.

Enfin, ces méthodes ne sont, par définition, applicables qu'aux MCP présentant une variation volumique suffisante lors du changement de phase.

L'objet de l'invention est de répondre, au moins en partie, aux limitations précédemment exposées. L'objet de l'invention est plus particulièrement de fournir un SST par MCP qui intègre un dispositif d'évaluation de l'état de charge du SST qui réponde, au moins en partie, aux limitations précédemment exposées.

RÉSUMÉ DE L'INVENTION

Pour atteindre cet objectif, selon un mode de réalisation, la présente invention prévoit un Système de Stockage Thermique (SST) par Matériau à Changement de Phase comprenant :

- une cuve destinée à recevoir un MCP, avantageusement présentant une phase solide et une phase liquide, et préférentiellement un échangeur thermique configuré pour plonger au moins partiellement dans la cuve et destiné à assurer la circulation d'un fluide caloporteur et le transfert thermique sans contact entre le MCP et le fluide caloporteur, et
- un dispositif d'évaluation de l'état de charge du SST

caractérisé en ce que le dispositif d'évaluation de l'état de charge du SST comprend :

- un système de circulation d'un gaz au travers du MCP avantageusement comprenant :

◦ un dispositif d'injection de gaz dans la cuve au contact du MCP, avantageusement au niveau d'une borne inférieure d'injection,

◦ un dispositif de sortie du gaz hors de la cuve, avantageusement au niveau d'une borne supérieure de sortie, et

- un capteur configuré pour délivrer une mesure représentative de l'évolution de la perte de charge du gaz injecté traversant le MCP avantageusement entre la borne inférieure et la borne supérieure et fonction de l'état de cristallisation du MCP avantageusement de sorte que l'évolution de la perte de charge soit représentative du niveau de charge du SST.

Suivant un mode de réalisation, le capteur est un manomètre configuré pour mesurer une pression différentielle du gaz ayant traversé le MCP. C'est à dire préférentiellement entre une borne inférieure et une borne supérieure.

Le dispositif d'évaluation de l'état de charge du SST est avantageusement agencé à l'extérieure de la cuve, seul le dispositif d'injection est configuré pour injecter le gaz dans la cuve. Le capteur de mesure est, de manière avantageuse, placé à l'extérieur de la cuve. Le dispositif selon l'invention permet de lever les difficultés des états de la technique. La mesure n'est pas intrusive et peu complexe à mettre en oeuvre même sur des SST déjà installés.

De manière surprenante, il a été constaté que la perte de charge du gaz traversant le MCP est fonction du niveau de cristallisation du MCP et donc que la phase de cristallisation est ainsi identifiable. Ainsi, le suivi des pertes de charge du gaz traversant le MCP permet de déterminer l'état de charge d'un SST contenant le MCP, plus particulièrement l'état du MCP et donc notamment l'état chargé, en décharge, ou déchargé du SST.

Selon un mode de réalisation avantageux, le système de circulation du gaz comprend un dispositif de régulation du débit de gaz injecté qui est préférentiellement constant.

De cette manière, la perte de charge est directement fonction de l'état de cristallisation du MCP.

Un autre aspect de la présente invention concerne un procédé d'évaluation du niveau de charge du SST tel que décrit ci-dessus caractérisé en ce qu'il comprend les étapes suivantes

- injection d'un gaz dans la cuve avantageusement au niveau d'une borne inférieure, préférentiellement à débit constant et avec une pression prédéfinie,
- acquisition de manière répétée d'une mesure représentative de la perte de charge du gaz injecté traversant le MCP avantageusement entre la borne inférieure et une borne supérieure,
- traitement de la mesure acquise à l'étape précédente pour évaluer la variation de la perte de charge du gaz traversant le MCP avantageusement entre la borne supérieure et la borne inférieure et déterminer l'état de charge du SST.

Le procédé selon l'invention est facile à mettre en oeuvre les mesures sont effectuées à l'extérieur de la cuve.

Un autre aspect de la présente invention concerne un produit programme ordinateur, avantageusement stocké sur un support non transitoire, et comprenant des instructions pour, lorsqu'il est exécuté par un processeur : recevoir des données de mesures représentatives de la perte de charge du gaz injecté traversant le MCP, évaluer l'évolution de la perte de charge et déterminer l'état de charge du SST.

Un autre aspect de la présente invention concerne un produit programme ordinateur, avantageusement stocké sur un support non transitoire, et comprenant des instructions pour lorsqu'il est exécuté par un processeur soit configuré pour déterminer une variation de pertes de charge d'un gaz traversant le MCP.

Avantageusement, le produit programme d'ordinateur est configuré pour mettre en oeuvre un procédé d'évaluation du niveau de charge du SST tel que décrit ci-dessus.

BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

Les FIGURES 1 et 2 sont des représentations schématiques d'un SST comprenant le dispositif d'évaluation de l'état de charge selon l'invention. La figure 1 correspond à un état chargé (en fin de charge), le MCP étant liquide, tandis que la figure 2 correspond à un état déchargé (en fin de décharge), le MCP étant solide.

La FIGURE 3 est un graphe illustrant l'évolution des pertes de charge du gaz, l'évolution des températures du MCP en fonction du temps et le débit du gaz injecté à la borne inférieure lors d'une phase de décharge avec un dispositif d'injection de type fourche ajourée.

La FIGURE 4 est un logigramme mis en oeuvre par le dispositif d'évaluation pour l'interprétation de la perte de charge de sorte à déterminer l'état de charge du MCP.

La FIGURE 5 est un graphe illustrant l'évolution des pertes de charge du gaz, l'évolution des températures du MCP en fonction du temps lors d'une phase de charge avec un dispositif d'injection de type fourche ajourée..

La FIGURE 6 est un graphe illustrant l'évolution des pertes de charge du gaz, l'évolution des températures du MCP en fonction du temps lors d'une phase de décharge avec un dispositif d'injection en Poral ®.

La FIGURE 7 est un graphe illustrant l'évolution des pertes de charge du gaz, l'évolution des températures du MCP en fonction du temps lors d'une phase de charge avec un dispositif d'injection en Poral ®.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

## DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement :

- Avantageusement, le capteur est un manomètre configuré pour mesurer une pression différentielle du gaz entre la borne inférieure et la borne supérieure,
- Avantageusement, le dispositif d'évaluation du niveau de charge du SST comprend un module de traitement d'au moins une mesure, le module de traitement étant configuré pour convertir ladite au moins une mesure en une donnée représentative de l'état de charge du SST.
- Avantageusement, le MCP est un MCP solide / liquide,
- Avantageusement, le SST comprend un échangeur thermique configuré pour plonger au moins partiellement dans la cuve et destiné à assurer la circulation d'un fluide caloporteur et le transfert thermique sans contact entre le MCP et le fluide caloporteur
- Avantageusement, le système de circulation du gaz comprend un circuit de circulation du gaz en dehors de la cuve, assurant la connexion fluidique entre la borne supérieure et la borne inférieure,
- Avantageusement, le système de circulation de gaz comprend un dispositif de régulation du débit de gaz injecté dans la cuve, préférentiellement configuré pour assurer un débit de gaz constant.
- Avantageusement, le système de circulation de gaz comprend un dispositif de régulation de la pression du gaz injecté dans la cuve avantageusement configuré pour que la pression du gaz injecté dans la cuve soit supérieure à la perte de charge subie par le gaz traversant le MCP dans la cuve.
- Avantageusement, le système de circulation de gaz comprend un dispositif de mise en circulation du gaz dans ledit circuit.
- Avantageusement, le système de circulation de gaz comprend un réservoir destiné à stocker du gaz.

Avantageusement, le gaz est un gaz neutre, par exemple de l'azote. Avantageusement, la cuve comprend un ciel de gaz.

Avantageusement, le dispositif d'injection de gaz est configuré pour générer une perte de charge singulière la plus faible possible sur le gaz. Avantageusement, le dispositif d'injection de gaz est une fourche ajourée munie d'une pluralité de trous destinées à libérer le gaz,

Avantageusement, le dispositif d'injection de gaz est un réseau de capillaires comprenant avantageusement une extrémité débouchante assurant la libération du gaz,

Avantageusement, le dispositif d'injection de gaz est un injecteur en Poral®.

- Avantageusement, la mesure représentative est une mesure de la pression différentielle du gaz entre la borne inférieure d'injection du gaz dans la cuve et la borne supérieure d'évacuation du gaz.
- Avantageusement, l'acquisition de la mesure est répétée toutes les 1 à 20 secondes,
- Avantageusement, le traitement de la mesure délivrée par le capteur comprend :

  - une étape de filtrage des mesures par différence entre des mesures de perte de charge moyennées et une mesure ponctuelle de perte de charge.
  - une comparaison de cette différence avec une première valeur de seuil et une deuxième valeur de seuil, * quand la différence est comprise entre la première valeur de seuil et la deuxième valeur de seuil, le dispositif d'évaluation de l'état de charge détermine que le MCP est à l'état liquide, * quand la différence est inférieure à la première valeur de seuil, le traitement se poursuit par
  - une étape de dérivation de la mesure de perte de charge en fonction du temps, * quand la dérivée est différente à 0, le dispositif d'évaluation de l'état de charge détermine que le MCP est en cours de cristallisation, * quand la dérivée est égale à 0, le dispositif d'évaluation du niveau de charge détermine que le MCP est cristallisé correspondant à un état déchargé du SST.

Avantageusement, l'état de charge du SST est donné pour l'état : chargé, en décharge, déchargé, plus précisément l'état de SST est fonction de l'état du MCP : liquide, en cours de cristallisation, cristallisé, en cours de fusion. Avantageusement, le module de traitement comprend un processeur, une mémoire de préférence RAM et/ou mémoire morte, interface d'entrée /sortie de données,

Avantageusement, le module de traitement comprend un module de communication sans fil ou filaire vers un appareil extérieur au module. Avantageusement, le module de traitement comprend le produit programme d'ordinateur décrit ci-dessus.

L'usage de l'article indéfini " un " ou " une " pour un élément ou une étape n'exclut pas, sauf mention contraire, la présence d'une pluralité de tels éléments ou étapes.

On entend par 'haut' et 'bas', ou leurs dérivés, une qualité de positionnement relatif d'un élément du SST lorsque celui-ci est installé de façon fonctionnelle, le 'haut' étant orienté à l'opposé du sol et le 'bas' étant orienté vers le sol.

L'invention concerne un Système de Stockage thermique (SST). Le stockage de l'énergie thermique permet à la chaleur d'être utilisée en différé. La chaleur peut être stockée sous plusieurs formes. L'invention s'attache au stockage sur la forme de chaleur latente avec l'utilisation de matériaux à changement de phase qui emmagasinent l'énergie à mesure qu'ils changent de phase. Lorsque le matériau atteint sa température de changement de phase, il absorbe une quantité de chaleur pour réaliser la transformation, connue sous le nom de chaleur latente de fusion ou de vaporisation selon le cas. A l'inverse, lorsque le matériau liquide ou gaz est refroidi, il retourne à la phase solide ou liquide en restituant sa chaleur latente.

En préambule, il convient de rappeler le fonctionnement d'un système de stockage thermique (SST) exploitant la chaleur latente d'un matériau à changement de phase (MCP) dans lequel s'intègre le dispositif d'évaluation détaillé plus bas.

De manière générale, un SST par MCP est constitué d'une cuve 1 dans lequel un fluide caloporteur échange sa chaleur avec le MCP 2. Si dans la majorité des cas, ce transfert thermique s'effectue sans contact direct entre le fluide caloporteur et le MCP 2, à l'instar du fonctionnement d'un échangeur thermique, il existe quelques systèmes anecdotiques dans lesquels le fluide et le MCP 2, non miscibles ensembles, échangent leurs calories par contact direct. Etant plus communément rencontré, la présente description de l'invention se concentre sur un SST dans lequel le fluide caloporteur et le MCP 2 échangent leurs chaleurs sans contact direct. Dans cette configuration, deux agencements sont possibles :

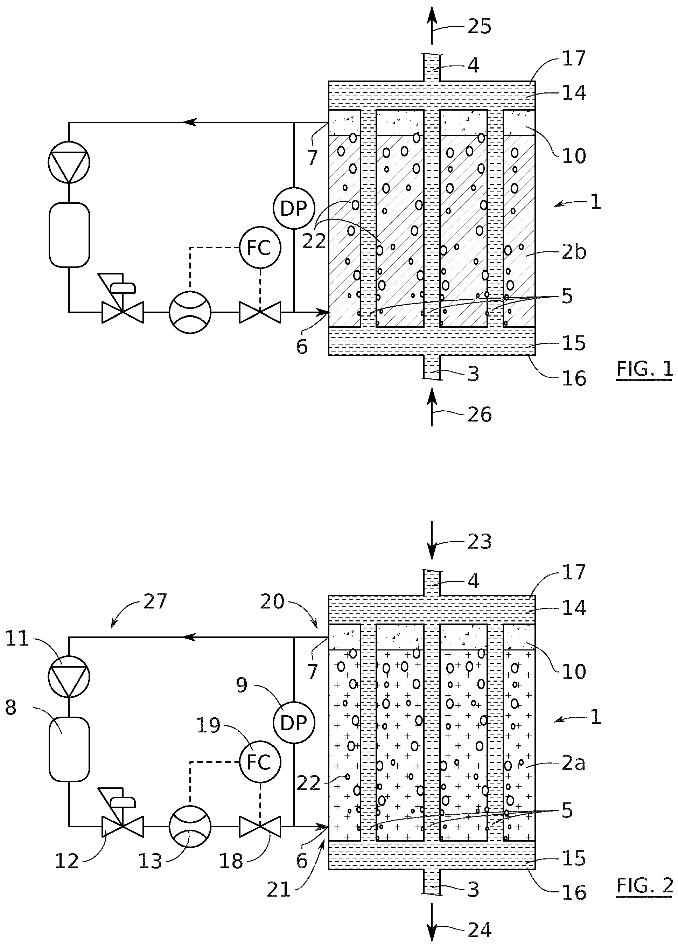

-    soit le MCP est contenu dans une calandre et est en contact avec un échangeur thermique dans lequel circule le fluide caloporteur (ce cas est celui illustré par les figures 1 et 2),
-    soit le MCP est confiné dans des espaces clos (i.e. encapsulé pour former des nodules, briques, boules,...) formés par des parois conductrices thermiquement, qui baignent à l'intérieur d'une calandre dans laquelle circule le fluide caloporteur.

Quelle que soit la configuration, le fonctionnement d'un SST exploitant la chaleur latente d'un MCP repose sur le même principe physique, à savoir la valorisation de l'énergie thermique caractéristique de l'enthalpie de changement d'état du MCP. Dans la majorité des cas, c'est la réaction réversible et isotherme de fusion/solidification qui est valorisée dans le stockage de chaleur latente. En effet, bien que la chaleur latente de fusion soit plus faible que la chaleur latente d'évaporation, la transition solide-liquide est la plus prometteuse puisqu'elle permet de limiter l'expansion volumique et ainsi l'augmentation de pression due au changement de phase.

Dans un SST, la chaleur sensible du MCP et même du système complet (matériaux structurants, fluide caloporteur,...) peut également être exploitée à la charge comme à la décharge. La quantité d'énergie thermique stockée en sensible est directement proportionnelle à la différence de température entre celle du SST et celle du changement d'état du MCP, à la chaleur spécifique du ou des matériaux structurants et à leurs masses. De ce fait, elle peut être quantifiée à partir de l'intégration d'une mesure de température obtenue par un capteur de température, tel qu'un thermocouple, une sonde platine ou tout autre moyen de mesure de température. La quantité d'énergie sensible stockée peut donc être évaluée à l'aide d'un capteur de température, contrairement à la quantité d'énergie latente stockée.

Le SST selon l'invention utilise préférentiellement un MCP 2, ou un mélange de MCP, diphasique, solide/liquide. Sans y être limité, le MCP 2 destiné à être contenu dans la cuve 1 peut comprendre au moins l'un parmi : de l'eau, une paraffine, un sel, tel que l'acétate de sodium trihydraté, un hydrate de sel, tel que le nitrate de magnésium hexahydraté, un alcool de sucre, tel que le xylitol, et leur mélange, avec ou sans additif Un tel mélange peut être un eutectique défini comme un mélange de deux corps purs qui fond et se solidifie à température constante ; un eutectique se comporte en fait comme un corps pur du point de vue de la fusion.

Le SST selon l'invention comprend une cuve 1 contenant un MCP 2 et un système de circulation d'un fluide caloporteur plongeant dans la cuve 1. Le système de circulation d'un fluide caloporteur forme un échangeur thermique interne à la cuve 1. L'échangeur thermique interne comprend préférentiellement un faisceau 5 de tubes à ailettes assemblé entre un collecteur et un distributeur hydraulique 14-15. La cuve 1 est également dénommée calandre, préférentiellement cylindrique pour des raisons de conception mécanique. En fonctionnement, le fluide caloporteur circule à l'intérieur des tubes et échange sa chaleur avec un MCP 2 contenu dans la cuve 1.

Avantageusement, la cuve 1 s'étend suivant une direction principale verticale. Avantageusement, l'échangeur thermique interne s'étend suivant une direction verticale, le faisceau 5 de tubes s'étend verticalement entre le collecteur et le distributeur 14-15 préférentiellement disposés aux extrémités supérieure et inférieure de la cuve 1. La cuve est une enceinte, c'est-à-dire qu'elle est close à l'exception des ouvertures décrites.

Le SST fonctionne suivant trois phases majeures : la charge, le stockage et la décharge.

- Une phase dite de charge, durant laquelle le fluide caloporteur cède sa chaleur au MCP 2, entrainant la fusion de celui-ci. La température du fluide est alors supérieure à la température de fusion du MCP 2 et son sens de circulation est préférentiellement vertical descendant.
- Une phase, dite de stockage, au cours de laquelle la circulation du fluide caloporteur est arrêtée et le MCP 2 conserve l'énergie thermique stockée, hors considération des déperditions thermiques avec l'extérieur.
- Une phase dite de décharge durant laquelle le fluide caloporteur circule à une température inférieure à la température de solidification du MCP 2, entrainant la cristallisation du matériau et le réchauffement du fluide caloporteur. Le fluide circule préférentiellement dans le sens vertical ascendant.

La présente invention repose sur l'exploitation et l'interprétation de la variation de la perte de charge d'un gaz traversant le MCP 2. En effet, les inventeurs ont identifié une correspondance nette entre le niveau de cristallisation du MCP 2 et l'évolution des pertes de charge du gaz traversant le MCP 2. Or, le niveau de cristallisation du MCP est révélateur du niveau de charge du SST.

On entend par pertes de charge la dissipation, par frottements, de l'énergie mécanique d'un fluide en mouvement. Les équations des pertes de charge distinguent : les pertes de charge linéaires et les pertes de charges singulières.

Cette dissipation d'énergie s'exprime couramment sous la forme d'une variation de pression. En l'espèce, le gaz injecté dans le MCP va remonter vers le ciel de gaz en traversant le MCP. L'état du MCP va influencer sur le déplacement du gaz. En fonction de la résistance qu'opposera le MCP au gaz, la perte de charge sera plus ou moins importante.

Les figures 1 et 2 illustrent schématiquement une coupe verticale d'un SST selon l'invention comprenant un dispositif d'évaluation du niveau de charge du SST. Le dispositif d'évaluation comprend un système de circulation de gaz configuré pour assurer la circulation du gaz dans la cuve 1 au contact du MCP 2 et en dehors de la cuve 1. Avantageusement, le système de circulation de gaz comprend un dispositif d'injection de gaz 6 dans la cuve 1 au contact du MCP 2 et un dispositif de sortie du gaz 7 de la cuve 1.

Avantageusement, le dispositif d'injection est choisi pour limiter les risques d'obturation et pour assurer de faibles niveaux de pertes de charge singulières générées par celui-ci, conduisant à marquer davantage l'écart entre les pertes de charge, inhérent à l'état du milieu traversé par le gaz. En outre, le dispositif d'injection de gaz est configuré pour assurer la dispersion de bulles, préférentiellement de petites tailles à l'intérieur du MCP liquide contenu dans la cuve 1 de sorte à limiter l'effet de coalescence entre elles continuant à assurer la formation d'un milieu poreux perméable et continu du MCP 2 lors de sa cristallisation. Cette configuration améliorera l'évaluation du niveau de charge du stockage en fonction de la mesure de la perte de charge du gaz, en en limitant l'écart de durée entre le moment où les pertes de charge du gaz deviennent à nouveau constantes et le moment où le MCP est intégralement cristallisé.

Avantageusement, le dispositif d'injection est agencé au niveau d'une borne, dite borne inférieure 21 de la cuve 1. Préférentiellement, le dispositif d'injection est agencé en partie inférieure de la cuve 1, c'est-à-dire dans le tiers inférieur de la cuve 1 plus préférentiellement, le dispositif d'injection est disposé à l'extrémité inférieure de la cuve 1, c'est-à-dire à proximité immédiate du fond 16 de la cuve 1 où se situe notamment le collecteur/distributeur 15 de l'échangeur thermique interne.

Le dispositif d'injection comprend préférentiellement au moins un injecteur 6, selon une possibilité deux ou plusieurs injecteurs 6 sont prévus pour améliorer la diffusion du gaz dans la cuve 1 et plus précisément dans le MCP 2. Selon un mode de réalisation, le dispositif d'injection comprend au moins un injecteur 6 agencé à proximité du fond 16 de la cuve 1. Le au moins un injecteur 6 est agencé avantageusement entre les tubes du faisceau de tubes 5 destinés à la circulation du fluide caloporteur décrit ci-dessus.

A titre d'exemple, le dispositif d'injection comprend une fourche munie d'une pluralité de trous destinés à libérer le gaz. La fourche comprend au moins deux branches agencées préférentiellement parallèlement au fond 16 de la cuve 1. Suivant une autre possibilité, le dispositif d'injection comprend un réseau de capillaires disposé entre le faisceau de tubes 5. Les capillaires sont débouchant par leur extrémité libérant ainsi le gaz. Suivant un autre mode de réalisation, le dispositif d'injection comprend un injecteur en Poral®, matériau poreux obtenu par frittage de poudre métallique. Ce type de dispositif d'injection permet de produire une grande quantité de petites bulles de gaz pour un même débit. Les conditions d'échange thermique entre le fluide caloporteur et le MCP peuvent également être différentes.

Avantageusement, le dispositif de sortie est agencé au niveau d'une borne, dite borne supérieure 20 de la cuve 1. La notion de supérieure et inférieure est relative c'est-à-dire que la borne supérieure 20 est agencée au-dessus de la borne inférieure 21. Préférentiellement, le dispositif de sortie est agencé en partie supérieure de la cuve 1 c'est-à-dire dans le tiers supérieur de la cuve 1 plus préférentiellement, le dispositif de sortie est disposé à l'extrémité supérieure de la cuve 1, c'est-à-dire à proximité immédiate du plafond 17 de la cuve 1 où se situe notamment le collecteur/distributeur 14 de l'échangeur thermique interne.

Le dispositif de sortie 7 est avantageusement une ouverture de la cuve 1 au niveau d'une borne supérieure 20. Préférentiellement, cette ouverture est en communication fluidique avec un circuit de circulation du gaz 27. Selon un mode de réalisation préféré, la borne inférieure 21 de la cuve 1 et la borne supérieure 20 de la cuve 1 sont en communication fluidique à l'extérieur de la cuve 1 par un circuit de circulation du gaz 27.

Ces dispositions particulières permettent de prévoir un parcours le plus long possible pour le gaz cheminant dans le MCP 2 contenu dans la cuve 1.

Le parcours de gaz au travers du MCP 2 doit être suffisant pour subir des pertes de charge représentative de l'état de cristallisation du MCP 2.

De manière caractéristique, le SST comprend un capteur 9 configuré pour délivrer une mesure représentative de l'évolution de la perte de charge du gaz injecté traversant le MCP 2 entre la borne inférieure 21 et la borne supérieure 20. Le capteur 9 est agencé avantageusement agencés aux bornes supérieure 20 et inférieure 21 de la cuve 1. Le capteur 9 est selon une possibilité préférée, un manomètre différentiel destiné à mesurer la différence de pression l'entrée et la sortie du gaz dans et hors de la cuve préférentiellement entre la borne inférieure 21 de la cuve 1 dans laquelle le gaz est injecté et la borne supérieure 20 de la cuve 1 dans laquelle le gaz est évacué de la cuve 1 après avoir traversé le MCP 2.

Avantageusement, l'acquisition de la mesure de la perte de charge se fait de manière répétée au cours du fonctionnement du SST, notamment lorsqu'un cycle de décharge est enclenché. A titre d'exemple, l'acquisition se fait toute les 1 à 20 secondes préférentiellement de l'ordre de 5 à 6 secondes. Pour information, un cycle de décharge dure de l'ordre de 2 à 4 heures.

Préférentiellement, le gaz injecté est un gaz neutre ou un mélange de gaz neutres de type azote ou argon pour éviter les problèmes de compatibilité avec l'air ambiant de certains MCP tels que les sucres alcooliques et certains acides gras qui réagissent avec l'oxygène et s'oxydent.

Suivant un mode de réalisation, la cuve 1 comprend un ciel gazeux 10 au-dessus du MCP 2. Selon une possibilité, le gaz du ciel de gaz 10 est de même composition que le gaz injecté. Le ciel gazeux 10 mis en place au-dessus du MCP 2 permet notamment d'absorber les variations volumiques du MCP 2 au cours des changements de phase liés aux cycles de charge et de décharge du SST. Le gaz inerte présente l'avantage de ne pas réagir avec le MCP 2 pour éviter notamment son oxydation.

Le Système d'évaluation de l'état du SST comprend en outre un module de traitement, tel qu'un régulateur PID (pour « proportionnel, intégrateur, dérivateur» ou « proportionnel, intégral, dérivée »), d'au moins une mesure ou signal de mesure. Le module de traitement n'est pas limité à cet exemple. Selon un autre exemple, Le module de traitement comprend un microcontrôleur.

Le module de traitement du dispositif de mesure est configuré pour convertir ladite au moins une de mesure en une donnée représentative de l'état de charge du SST. Ladite au moins une mesure comprend la mesure d'une pression différentielle d'un gaz entre le dispositif d'injection du gaz dans la cuve et le dispositif de sortie du gaz hors de la cuve 1.

La figure 1 illustre la phase de décharge dans laquelle le SST décharge l'énergie thermique stockée au profit du fluide caloporteur. Dans cette phase, le fluide caloporteur circule de bas en haut dans le système de circulation du fluide caloporteur, c'est-à-dire l'échangeur thermique et notamment le faisceau de tubes 5. Le fluide caloporteur pénètre à une première température 26 dans le distributeur 15 à partir de la tubulure d'entrée 3 qui distribue le fluide au faisceau de tubes 5 plongeant dans le MCP 2 de la cuve 1. En cheminant dans le faisceau de tubes 5 en contact avec le MCP 2, le MCP cède de la chaleur au fluide caloporteur. Le fluide caloporteur ressort de faisceau de tubes 5 par le collecteur 14 puis est évacué de la cuve 1 par la tubulure de sortie 4. Le fluide ressort à une deuxième température 25 plus élevée que la première température. Le MCP 2 qui cède l'énergie thermique au fluide caloporteur va diminuer en température jusqu'à changer d'état. Classiquement, le MCP 2 passe de l'état liquide 2b à l'état solide 2a lors de la phase de décharge.

Pendant cette phase de décharge, le changement d'état du MCP 2 se fait par cristallisation. Avantageusement, l'injection du gaz assure un contrôle de la cristallisation en évitant les risques de surfusion notamment. En créant de l'agitation, l'injection de gaz à travers le MCP 2 contribue également à améliore l'échange thermique entre la fraction liquide du MCP et le fluide caloporteur. Le gaz est donc injecté dans la cuve 1 par l'injecteur 6 directement au contact du MCP 2, selon un mode de réalisation préféré selon un débit prédéfini et constant. Le gaz va cheminer dans le MCP 2, en direction de l'extrémité supérieure de la cuve 1 avec la formation de bulles 22 dans le MCP 2 qui favorise entre autres la formation de cristaux (sites de nucléations) propices à la propagation de la cristallisation du MCP 1, dans le reste de la cuve. Ainsi, en fin de décharge comme illustré à la figure 1, le MCP 2 est quasi ou intégralement à l'état cristallisé refroidit, le MCP est majoritairement à l'état solide 2a. Le gaz injecté par l'injecteur 6 en borne inférieure 21 évolue à travers un milieu poreux perméable et continu, formé au cœur du MCP cristallisé, totalement ou au moins majoritairement, en remontant jusqu'au ciel de gaz 10.

Le capteur 9 est agencé aux bornes supérieure 20 et inférieure 21 de la cuve 1. Préférentiellement, un manomètre différentiel destiné à mesurer la différence de pression du gaz.

La différence de pression du gaz mesurée correspond à la somme des pertes de charge linéaires et singulières du circuit de circulation de gaz et du dispositif d'injection de gaz auxquelles s'ajoute la perte de charge induite par la friction du gaz traversant le milieu poreux formé au cœur du MCP cristallisé. Cette dernière perte de charge qui évolue en fonction de l'état du MCP 2 et participe à la détermination de l'état de charge du SST.

Le circuit de circulation 27 du gaz comprend une branche sur laquelle le capteur 9 est connecté aux bornes 20-21 de la cuve 1 et en parallèle au capteur 9, le circuit de circulation 27 comprend un dispositif de mise en circulation du gaz tel que par exemple une pompe 11 ou un compresseur ou surpresseur.

Le circuit de circulation 27 comprend avantageusement un réservoir 8 ou capacité destiné à assurer le stockage temporaire du gaz en cas d'arrêt du dispositif d'évaluation de l'état de charge du SST ou bien pour augmenter ou diminuer la quantité de gaz en circulation.

Le circuit de circulation 27 comprend avantageusement un dispositif de régulation de la pression du gaz injecté dans la cuve 1. A titre d'exemple un détendeur 12 assure cette fonction. Préférentiellement, la pression du gaz injecté dans la cuve 1 par le dispositif d'injection 6 est supérieure à la perte de charge subie par le gaz traversant la cuve 1 au contact du MCP de sorte que le gaz soit évacué de la cuve 1 avec une pression non nulle. À titre d'exemple, la pression du gaz injecté est comprise entre 2 et 6 bars.

Le circuit de circulation 27 comprend avantageusement un dispositif de régulation du débit du gaz injecté par le dispositif d'injection 6. Selon un mode de réalisation préféré, le débit du gaz injecté est constant de sorte à faciliter l'interprétation des pertes de charge subies par le gaz. À titre d'exemple, la régulation du débit est assurée par un débitmètre 13 pilotant une vanne 18, notamment par rétrocontrôle 19. A titre d'exemple, Le gaz est injecté avec un débit compris entre 0,5 et 10Nl/min.

La figure 2 illustre la fin de la phase de charge dans laquelle le SST charge l'énergie thermique apportée par le fluide caloporteur. Dans cette phase, le fluide caloporteur circule de haut en bas dans le système de circulation du fluide caloporteur, c'est-à-dire l'échangeur thermique. Le fluide caloporteur pénètre à une première température 23 dans le distributeur 14 à partir de la tubulure d'entrée 4 qui distribue le fluide au faisceau de tubes 5 plongeant dans le MCP 2 de la cuve 1. En cheminant dans le faisceau de tubes 5 en contact avec le MCP 2, le fluide caloporteur cède de la chaleur au MCP 2. Le fluide caloporteur ressort de faisceau de tubes 5 par le collecteur 15 puis est évacué de la cuve 1 par la tubulure de sortie 3. Le fluide ressort à une deuxième température 24 plus faible que la première température. Le MCP 2 qui récupère l'énergie thermique du fluide caloporteur va augmenter en température jusqu'à changer d'état. Classiquement, le MCP 2 passe de l'état solide 2a à l'état liquide 2b lors de la phase de charge.

En fin de charge, le MCP est intégralement à l'état liquide voir de liquide surchauffé.

Le gaz injecté évolue sous forme de bulles 22 à travers le MCP à l'état liquide en remontant jusqu'au ciel de gaz 10.

Comme en figure 1, le capteur 9 est agencé aux bornes supérieure 20 et inférieure 21 de la cuve 1. La différence de pression du gaz mesurée correspond à la somme des pertes de charge linéaires et singulières du circuit de circulation de gaz et du dispositif d'injection de gaz, comme en fin de charge illustrée à la figure 1, auxquelles s'ajoute la différence de pression induite par la hauteur manométrique du MCP à l'état liquide contenu dans la cuve 1. Cette dernière participe à la détermination de l'état du MCP et donc de l'état de charge du SST.

Le circuit de circulation 27 comprend avantageusement les mêmes dispositifs que ceux décrits au regard de la figure 1.

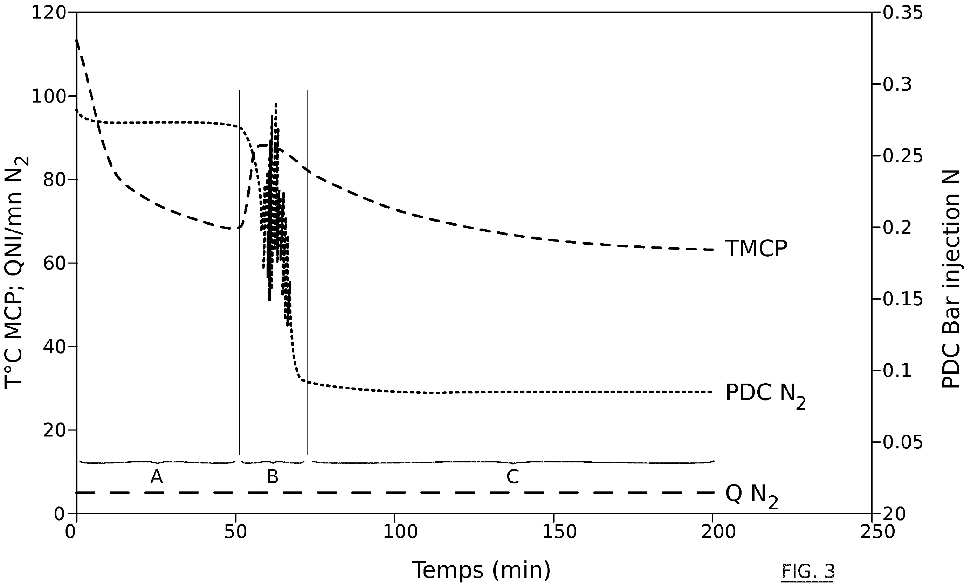

La figure 3 illustre sur un même graphe l'évolution des pertes de charge mesurées lors de phase de décharge et la température du MCP dans la cuve.

Le MCP utilisé est un alcool de sucre, le xylitol. Le gaz injecté est de l'azote à un débit de gaz constant de 1 à 10 Nl/min pour un système de stockage de chaleur latente de 10 kWh, contenant avantageusement environ 59 kg de Xylitol exploité comme MCP. La température d'entrée du fluide caloporteur dans le SST est de 65°C.

Cette expérience a été effectuée à différents débits de gaz (non représentés) Malgré l'écart entre les débits de gaz expérimentés, une tendance apparait assez distinctement et présente systématiquement une évolution des pertes de charge suivant trois phases illustrées sur la figure 3.

Durant la première phase encadrée par le périmètre A, intervenant avant la cristallisation du MCP, c'est à dire quand le SST est encore au moins partiellement chargé, les pertes de charge se maintiennent à un niveau constant et dans ce cas présent élevé. Cette valeur élevée des pertes de charge du gaz durant cette période s'explique suivant une possibilité par la contrainte importante opposée au gaz par le MCP, qui à ce stade est essentiellement en phase liquide et/ou en surfusion. Cette différence de pression élevée correspond donc principalement à la hauteur manométrique du MCP liquide 2b contenu dans la cuve 1, à laquelle s'ajoutent les pertes de charges singulières et linéaires générées par l'injecteur 6 et par le circuit de gaz.

La deuxième phase, encadrée par le périmètre B sur la figure 3, apparait quasiment au même moment que le déclenchement de la cristallisation du MCP et elle se déroule ensuite pendant une grande partie de la durée de celle-ci. Lors de cette transition, les pertes de charge diminuent, dans le cas présent progressivement et malgré de fortes oscillations traduisant l'instabilité de cette phase. Comme indiqué précédemment, il est intéressant de relever la concordance du moment à partir duquel la cristallisation du MCP, ici du Xylitol, est déclenchée, observé d'une part sur la courbe traçant la température du MCP en fonction du temps et d'autre part sur celle traçant l'évolution des pertes de charge du gaz en fonction du temps. Plus précisément, sur chacune des courbes le déclenchement de la cristallisation se manifeste par un changement de pente, en l'espèce un premier changement de pente (dans les conditions opératoires « établies » des essais). On entend par changement de pente par exemple une inflexion dans la courbe.

Dans la troisième phase encadrée par le périmètre C sur la figure 3, la cristallisation a eu lieu, le MCP est à l'état cristallisé, c'est-à-dire que le SST est déchargé. Les pertes de charge se maintiennent de nouveau à un niveau constant, mais dans le cas présent à des valeurs bien plus faibles que celles relevées lors de la première phase A. Les valeurs constantes mesurées ne diffèrent qu'en fonction du débit d'injection du gaz. Comme observé au début de la phase de charge lorsque le MCP est solidifié, l'évolution constante des pertes de charge peut sans doute s'expliquer par la formation d'un réseau de canaux au milieu du MCP solidifié 2a communicant et débouchant dans le ciel gaz 10. Le gaz semble donc évoluer au milieu d'un MCP 2 qui en solidifiant est devenu un milieu poreux et perméable.

Il est donc possible de connaitre en temps réel le moment à partir duquel la cristallisation du MCP est déclenchée en interprétant les mesures des pertes de charge du gaz le traversant lors de la décharge. Cette solution, bien moins intrusive et bien moins complexe à mettre en oeuvre que l'insertion de thermocouples au cœur du système, semble plus adaptée pour remonter à cette information sur des moyens de stockage de cette conception, déployés à l'échelle industrielle. De plus cette solution présente l'avantage d'une mesure plus uniforme à l'échelle du SST contrairement aux mesures de températures du MCP qui demeurent plus localisées et par conséquent moins représentatives.

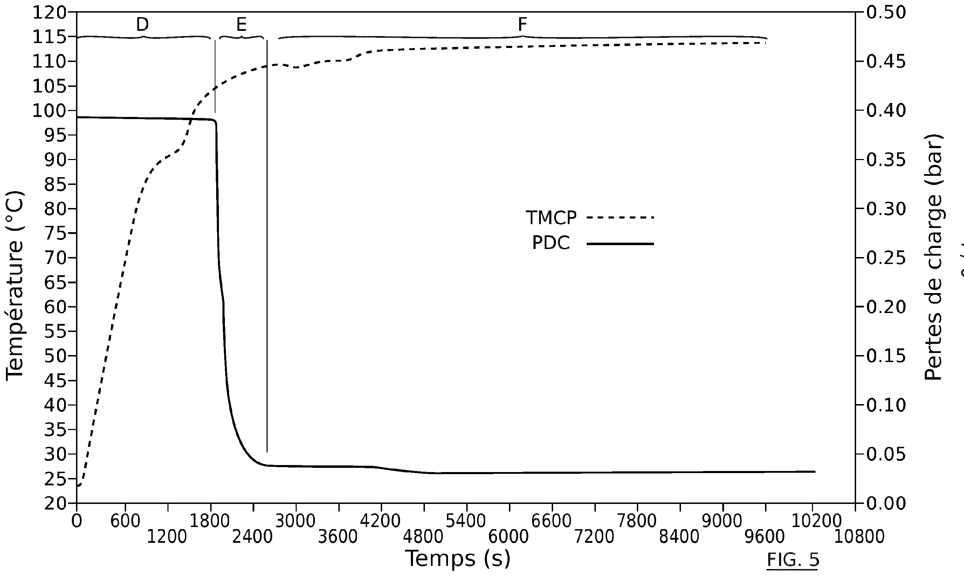

A titre d'exemple, la figure 5 illustre sur un même graphe l'évolution des pertes de charge mesurées lors de phase de charge et la température du MCP dans la cuve suivant les mêmes conditions qu'en figure 3.

De la même manière, l'évolution des pertes de charge se décompose en trois zones.

Dans la première phase encadrée par le périmètre D sur la figure 5, la fusion n'a pas eu lieu, le MCP est à l'état solide, c'est-à-dire que le SST est au moins partiellement déchargé. Les pertes de charge se maintiennent à un niveau constant. Les valeurs constantes mesurées ne diffèrent qu'en fonction du débit d'injection du gaz. Comme observé à la fin de la phase de décharge lorsque le MCP est solidifié, l'évolution constante des pertes de charge peut sans doute s'expliquer par la formation d'un réseau de canaux au milieu du MCP solidifié 2a communicant et débouchant dans le ciel gaz 10. Le gaz semble donc évoluer au milieu d'un MCP 2 qui en solidifiant est devenu un milieu poreux et perméable.

La deuxième phase, encadrée par le périmètre E sur la figure 5, apparait quasiment au même moment que le déclenchement de la fusion du MCP et elle se déroule ensuite pendant une grande partie de la durée de celle-ci. Lors de cette transition, les pertes de charge augmentent, dans le cas présent progressivement. Comme indiqué précédemment, il est intéressant de relever la concordance du moment à partir duquel la fusion du MCP, ici du Xylitol, est déclenchée, observé d'une part sur la courbe traçant la température du MCP en fonction du temps et d'autre part sur celle traçant l'évolution des pertes de charge du gaz en fonction du temps. Plus précisément, sur chacune des courbes le déclenchement de la fusion se manifeste par un changement de pente, en l'espèce un premier changement de pente (dans les conditions opératoires « établies » des essais).

Durant la troisième phase encadrée par le périmètre F, intervenant après la fusion du MCP, c'est à dire quand le SST est chargé, les pertes de charge se maintiennent à un niveau constant et dans ce cas présent élevé. Cette valeur élevée des pertes de charge du gaz durant cette période s'explique suivant une possibilité par la contrainte importante opposée au gaz par le MCP, qui à ce stade est essentiellement en phase liquide et/ou en surfusion. Cette différence de pression élevée correspond donc principalement à la hauteur manométrique du MCP liquide 2b contenu dans la cuve 1, à laquelle s'ajoutent les pertes de charges singulières et linéaires générées par l'injecteur 6 et par le circuit de gaz.

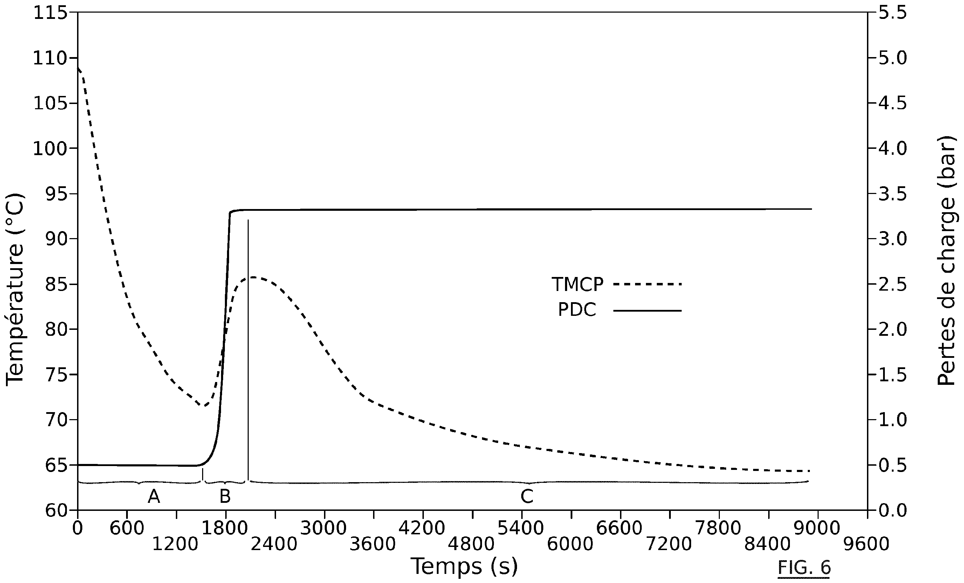

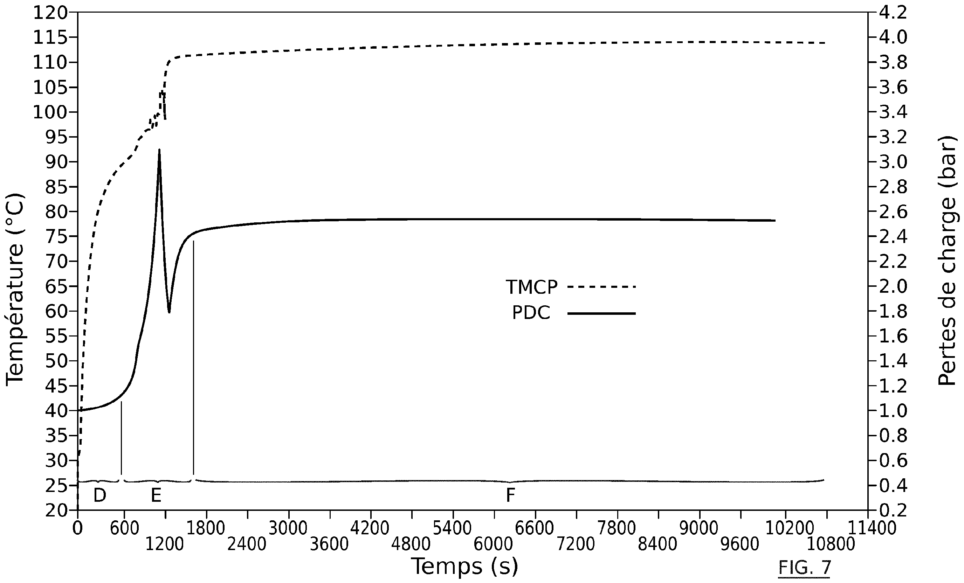

A titre d'exemple, les figures 6 et 7 illustrent respectivement sur un même graphe l'évolution des pertes de charge mesurées lors de phase de décharge et de charge et la température du MCP dans la cuve suivant les mêmes conditions qu'ne figures 3 et 5 mais avec un dispositif d'injection en Poral®.

De la même manière, l'évolution des pertes de charge se décompose en trois zones.

Au cours de la phase A en décharge, figure 6, et de même lors de la phase E en charge, figure 7, le MCP est à l'état liquide voir liquide surchauffé, la perte de charge totale est toujours fonction des pertes de charges linéiques et singulière du dispositif d'injection du gaz auxquelles s'ajoutent la différence de pression induite par la hauteur manométrique exercée par le MCP à l'état liquide.

Dans ces conditions, la deuxième phase B en décharge, figure 6, incluant le changement d'état du MCP la cristallisation, la perte de charge augmente brutalement et considérablement (à l'inverse de la figure 3). Une des raisons pouvant expliquer ce phénomène serait la formation d'un milieu très poreux et perméable, les conditions d'échange thermique entre le fluide caloporteur et le MCP pourraient également avoir une influence. Un débit de gaz est maintenu mais probablement très restrictif expliquant que la perte de charge augmente fortement. Le phénomène inverse se produit lors de la phase E de la figure 7 incluant la fusion.

En effet, nous avons observé que les conditions d'échange thermique entre le fluide caloporteur et le MCP sont sans doute plus influentes encore sur la perméabilité du milieu poreux formé par le MCP au cours de sa cristallisation.

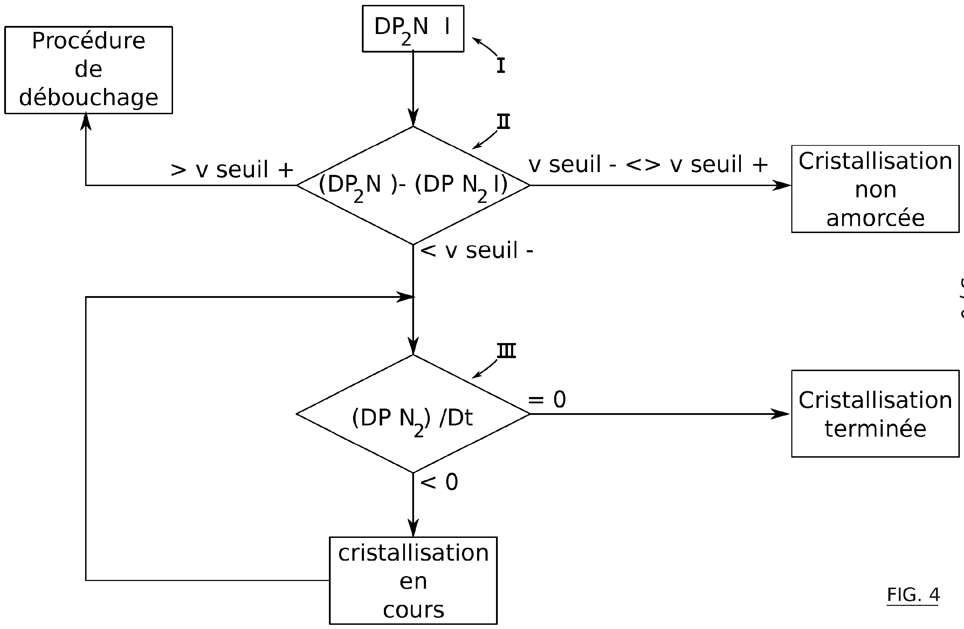

Selon un mode de réalisation, le module de traitement du système d'évaluation de l'état de charge du SST met en oeuvre un logigramme tel qu'illustré en figure 4.

A l'étape I, le capteur 9 mesure un différentiel de pression entre le gaz injecté à la borne inférieure 21 et le gaz en sortie de cuve en borne supérieure 20, selon une possibilité décrite ci-dessus, le capteur 9 est un manomètre différentiel dont le signal en sortie est une tension ou une intensité qui sont traitées par le module de traitement pour délivrer une perte de charge. Le module de traitement comprenant par exemple une centrale d'acquisition et de traitement.

La mesure de pression différentielle est avantageusement réalisée toutes les 1 à 20 secondes, à titre d'exemple 6 secondes.

A l'étape II, les mesures de perte de charge sont moyennées. C'est-à-dire que les mesures relevées sur une période stabilisée comprise entre et 10 minutes sont moyennées pour être suffisamment longue pour être représentative. Par exemple, la moyenne est réalisée en prenant les mesures effectuées sur les 2 à 5 dernières minutes. La moyenne des pertes de charge est réduite de la mesure ponctuelle de perte de charge. La moyenne permet de s'affranchir des variations ponctuelles de perte de charge, non représentatives de l'état de charge. Ces variations ponctuelles sont des artefacts visibles sur la figure 3 en particulier pendant la phase de cristallisation. Sans être lié à une explication particulière, cela peut s'expliquer par le gaz qui circule sous forme de bulles 22 qui se regroupent en remontant vers la borne supérieure 20. Ce phénomène est de plus augmenté lors de la cristallisation quand la viscosité du MCP 2 augmente, les bulles 22 ralentissent et il y a coalescence. Les grosses bulles 22 débouchent d'un coup au niveau de la borne supérieure 20 faisant varier la pression différentielle.

Tant que cette différence est supérieure à une valeur seuil prédéfinie, le dispositif d'évaluation de l'état de charge du SST interprète que la cristallisation n'a pas débuté, le MCP est à l'état liquide, le SST est à l'état au moins partiellement chargé. L'étape II est répétée.

Si cette différence est inférieure à la valeur seuil prédéfinie, le module de traitements effectue l'étape III.

A l'étape III, la mesure de perte de charge est dérivée en fonction du temps.

Si la dérivée par rapport au temps est différente à 0, le dispositif d'évaluation de l'état de charge du SST interprète que la cristallisation est en cours, le MCP est à l'état liquide 2a au moins partiellement cristallisé, le SST est en cours de décharge, l'étape III est répétée. Plus précisément, lorsque la dérivée par rapport au temps est supérieure à 0, il une grande efficacité d'échange thermique entre le MCP et le gaz, la perte de charge de gaz augmente lors de la cristallisation, comme illustré en figure 7. A l'inverse lorsque la dérivée par rapport au temps est inférieure à 0, il une faible efficacité d'échange thermique entre le MCP et le gaz, la perte de charge de gaz diminue lors de la cristallisation, comme illustré en figure 3.

Quand la dérivée par rapport au temps est égale à 0, le dispositif d'évaluation de l'état de charge du SST interprète que la cristallisation est terminée, le MCP est à l'état cristallisé, le SST est déchargé.

A titre préféré, il peut être prévu une étape de débouchage du dispositif d'injection en cas de différence obtenue à l'étape II est supérieure à la valeur supérieure du seuil prédéfini.

Avantageusement, l'invention comprend une phase de mise en place du système de stockage et du dispositif d'évaluation du niveau de charge du SST. Cette phase préalable de mise en place comprend l'étalonnage du dispositif d'évaluation permettant de déterminer la corrélation entre l'évolution des pertes de charge du gaz et le déclenchement de la cristallisation du MCP et avantageusement le déclenchement de la fusion du MCP.

Exemples :

Expressions des pertes de charge du gaz traversant par bullage le MCP à l'état liquide

Les pertes de charge de l'azote, notées $\Delta P$, traversant le stockage par bullage à travers le MCP à l'état liquide peuvent s'exprimer par la relation suivante :

$$\Delta P = \Delta P_h + \Delta P_{injection}$$

Dans cette relation, la différence de pression $\Delta P_h$ consécutive à la hauteur manométrique de MCP liquide $\Delta h_{liquide}$ s'exprime par la relation suivante :

$$\Delta P_h = \rho_{liquide} \cdot g \cdot \Delta h_{liquide}$$

D'autre part, les pertes de charges linaires et singulières engendrées par la partie du circuit de gaz et par le dispositif d'injection (en l'occurrence la fourche pour ce cas d'étude) situés entre les bornes de mesure du manomètre différentiel, s'expriment par la relation suivante :

$$\Delta P_{injection} = \frac{\rho_{gaz} V_{gaz}^2}{2} \left[ f_{circuit} \frac{L}{D} + \xi_{circuit} + \xi_{dispositif} \right]$$

En considérant,

$f_{circuit}$ : correspond au coefficient de friction du circuit de gaz

$\xi_{circuit}$ : correspond au coefficient relatif aux singularités présentent dans le circuit de gaz, telles que les constrictions, les changements d'orientation brusques, etc

$\xi_{dispositif}$ : correspond au coefficient relatif à la singularité induite par le dispositif de bullage, s'apparentant dans ce cas à une constriction forte.

Par conséquent, les pertes de charge de l'azote traversant le stockage par bullage à travers le MCP à l'état liquide peuvent s'exprimer sous la forme développée suivante :

$$\Delta P = \rho_{liquide} \cdot g \cdot \Delta h_{liquide} + \frac{\rho_{gaz} V_{gaz}^2}{2} \left[ f_{circuit} \frac{L}{D} + \xi_{circuit} + \xi_{dispositif} \right]$$

Expressions des pertes de charge du gaz traversant le MCP à l'état cristallisé

La circulation du gaz à travers le MCP cristallisé confirme la présence d'un ou plusieurs passages perméables et continus, empruntés par le gaz pour circuler du dispositif de bullage par lequel il est injecté dans le MCP, jusqu'au ciel présent à la surface libre du MCP, où il est collecté avant d'être extrait du système. Ces passages par lesquels le gaz progresse sont supposés se former progressivement au cours de la cristallisation du MCP. La géométrie de ces passages qui rendent le MCP cristallisé perméable au passage du gaz n'est pas toutefois clairement définie, puisqu'elle dépend de nombreux paramètres comme la taille, la fréquence des bulles, ainsi que leur possibilité de coalescence lorsqu'elles traversent le MCP à l'état liquide. En revanche, les mesures effectuées lors des essais de décharge du stockage (conduisant à la cristallisation du Xylitol) permettent d'apporter des premiers éléments de réponse et des suppositions sur la géométrie de ce milieu.

Les pertes de charge de l'azote traversant le stockage par bullage à travers un milieu perméable et continu formé au cœur du MCP solide peuvent s'exprimer par la relation suivante :

$$\Delta P = \Delta P_{injection} + \Delta P_{MCP\ cristallisé}$$

$$\Delta P = \frac{\rho_{gaz} V_{gaz}^2}{2} \left[ f_{circuit} \frac{L}{D} + \xi_{circuit} + \xi_{dispositif} \right] + \Delta P_{MCP\ cristallisé}$$

Dans cette relation, l'expression des pertes de charge inhérentes à la traversée du gaz à travers le MCP cristallisé, regroupées dans le terme $\Delta P_{MCP\ cristallisé}$, peut être développée sous la forme suivante :

$$\Delta P_{MCP\ cristallisé} = \frac{\rho_{gaz} V_{gaz}^2}{2} \left[ f_{milieu} \frac{L}{D} + \xi_{milieu} \right]$$

Où,

$f_{milieu}$ : correspond au coefficient de friction du milieu perméable et continu formé au cœur du MCP et traversé par le gaz,

$\xi_{milieu}$ : correspond au coefficient relatif aux singularités présentent dans ce milieu, telles que les constrictions, les changements d'orientation brusques, etc

Différents essais ont permis d'observer que la perte de charge du gaz induite par son ascension à travers le milieu perméable et continu formé au cœur du MCP, évolue suivant une fonction linéaire.

Ce constat implique vraisemblablement que le gaz s'écoule en régime laminaire à travers les passages formés au cœur du MCP cristallisé. Il est donc très probable que la section aéraulique des passages et/ou leurs nombres conduisent à de très faibles vitesses d'écoulement du gaz et ce pour tous les débits d'injection expérimentés lors des essais (i.e. jusqu'à 5 Nl/min).

Il est par conséquent possible de considérer que la perte de charge liée au milieu perméable et continu formé au cœur du MCP est majoritairement tributaire des effets de frictions et peut donc se simplifier sous la forme suivante :

$$\Delta P_{MCP\ cristallisé} = \frac{\rho_{gaz}\ V_{gaz}^2}{2}\left[f_{milieu}\ \frac{L}{D}\right]$$

En s'appuyant sur ces observations, il est possible de conclure à ce stade que le gaz circule en fin de décharge du stockage, à travers un milieu perméable et continu formé au cœur du MCP cristallisé. En particulier sur la gamme des débits expérimentés, à savoir de 0.2 à 5 Nl/min, le régime d'écoulement du gaz à travers ce milieu s'apparente très fortement à un régime d'écoulement laminaire. Seules les pertes de charges inhérentes aux effets de frictions du gaz contre les parois de ce milieu semblent donc s'appliquer entre la sortie du dispositif d'injection et le ciel de gaz.

Au-delà de ces conclusions, plusieurs suppositions peuvent être émises sur la nature du milieu et/ou sur la géométrie du ou des passages formés au cours de la cristallisation du MCP et empruntés par le gaz lors de cette phase :

- Soit le gaz emprunte un seul passage, dont la section aéraulique importante conduit à un régime d'écoulement laminaire aux débits expérimentés,
- Soit le gaz emprunte plusieurs passages, dont la section aéraulique équivalente est suffisamment élevée pour conduire à un régime d'écoulement laminaire aux débits expérimentés,
- Soit le nombre de passages formés et empruntés par le gaz sont très élevés, ce qui conduit à considérer le MCP cristallisé comme s'apparentant à un milieu poreux, qui se serait formé sous l'effet du bullage lors de la cristallisation du MCP. Dans cette configuration l'écoulement pourra être interprété suivant la loi de Darcy.

Expression de la perte de charge du gaz en fonction du débit dans le cas d'une circulation à travers un passage unique

En supposant que le gaz circule à travers un passage de « section régulière » formé au cœur du MCP cristallisé, l'expression du coefficient de friction $f_{milieu}$ s'exerçant lors d'un régime d'écoulement laminaire est donnée par la relation :

$$f_{milieu} = \frac{64}{Re} = \frac{64\ \mu}{\rho_{gaz}\ V_{gaz}\ D}$$

L'expression de la perte de charge induite par la circulation du gaz à travers le passage formé au cœur du MCP cristallisé peut alors s'écrire :

$$\Delta P_{passage} = 128\ Q\ \mu\ \frac{L}{\pi\ D^4}$$

Connaissant le débit injecté, il est possible d'estimer le diamètre aéraulique du passage emprunté par le gaz, lorsqu'un dispositif d'injection de type fourche a été utilisé. Le diamètre aéraulique du passage formé au milieu du MCP cristallisé est évalué à D ≈ 36.6 mm.

Expression de la perte de charge du gaz en fonction du débit dans le cas d'une circulation à travers un milieu poreux perméable et continu.

En supposant que l'injection du gaz à travers le MCP en phase de cristallisation a conduit à la formation d'un milieu poreux perméable et continu au cœur du MCP, l'expression de la perte de charge induite par celui-ci en fonction du débit d'injection est donnée par la loi de Darcy :

$$\Delta P_{poreux} = \frac{Q}{S}\ \mu\ \frac{L}{P_0}$$

*L : Longueur [m] caractéristique de l'écoulement (normal au sens de l'écoulement) ou l'épaisseur de la paroi du milieu poreux [m]*
*$P_0$: Coefficient de perméabilité du milieu poreux [m²]*

En considérant que le débit total Q se fractionne en un nombre n de débits partiels $\delta Q$, traversant *n* « micro passages » rectilignes, parallèles et uniformes formés au cœur du MCP cristallisé, de diamètre aéraulique d :

$$Q = n \, . \, \partial Q$$

L'expression de la perte de charge induite par la circulation du gaz à travers un micro passage formé au cœur du MCP cristallisé peut alors s'écrire :

$$\Delta P_{poreux} = 128 \, . \, \partial Q \, . \, \mu \frac{L}{\pi \, d^4}$$

Or, d'après la loi de Darcy :

$$\Delta P_{poreux} = \frac{Q}{S} \, \mu \, \frac{L}{P_0} = \frac{n \, \partial Q}{S} \, \mu \, \frac{L}{P_0}$$

Conduisant à :

$$\Delta P_{poreux} = 128 \, . \, \partial Q \, . \, \mu \, \frac{L}{\pi \, d^4} = \frac{n \, \partial Q}{S} \, \mu \, \frac{L}{P_0}$$

La porosité Ø est définie par le rapport entre le volume des pores et le volume total du milieu poreux. Elle s'exprime donc par la relation suivante :

$$\emptyset = \frac{V_{pores}}{V_{total}}$$

Dans le cas d'un milieu poreux homogène et isotrope, il est possible de considérer la porosité comme égale à la surface occupée par les pores par rapport à la surface du milieu poreux. La porosité dans ce cas peut s'exprimer par la relation :

$$\emptyset = n \frac{\pi \, d^2}{4 \, S}$$

Et conduit à une expression simplifiée du coefficient de perméabilité du milieu poreux $P_0$ :

$$P_0 = n \frac{\pi \, d^4}{128 \, . \, S} = \frac{\emptyset \, d^2}{32}$$

REFERENCES

1. Cuve
2. MCP 2.a MCP solide 2.b MCP liquide
3. Tubulure de circulation d'entrée ou de sortie du fluide caloporteur
4. Tubulure de circulation d'entrée ou de sortie du fluide caloporteur

5. Faisceau de tubes plongeant dans le MCP
6. Injecteur
7. Valve d'évacuation
8. Réservoir
9. Manomètre différentiel
10. Ciel de gaz
11. Pompe d'injection
12. Détendeur
13. Débitmètre
14. Collecteur/distributeur supérieur
15. Collecteur/distributeur inférieur
16. Fond de cuve
17. Plafond de cuve
18. Vanne de régulation
19. Rétrocontrôle
20. Borne supérieure
21. Borne inférieure
22. Bulles
23. Fluide caloporteur à une première température
24. Fluide caloporteur à une deuxième température supérieure à la température 23
25. Fluide caloporteur à une première température
26. Fluide caloporteur à une deuxième température inférieure à la température 25

**Revendications**

1. Système de Stockage Thermique (SST) par Matériau à Changement de Phase comprenant une cuve (1) destinée à recevoir un MCP (2), et un dispositif d'évaluation du niveau de charge du SST **caractérisé en ce que** le dispositif d'évaluation du niveau de charge du SST comprend

   - un système de circulation d'un gaz au travers du MCP (2) comprenant :

      ◦ un dispositif d'injection du gaz (6) dans la cuve (1) au contact du MCP (2) au niveau d'une borne inférieure (21),
      ◦ un dispositif de sortie du gaz (7) hors de la cuve (1) au niveau d'une borne supérieure (20), et

   - un capteur (9) configuré pour délivrer une mesure représentative de l'évolution de la perte de charge du gaz injecté traversant le MCP (2) entre la borne inférieure (21) et la borne supérieure (20) et fonction de l'état de cristallisation du MCP (2) de sorte que l'évolution de la perte de charge soit représentative du niveau de charge du SST.

2. SST selon la revendication précédente dans lequel le capteur est un manomètre (9) configuré pour mesurer une pression différentielle du gaz entre la borne inférieure (21) et la borne supérieure (20).

3. SST selon l'une quelconque des revendications précédentes dans lequel le dispositif d'évaluation du niveau de charge du SST comprend un module de traitement d'au moins la mesure délivrée par le capteur (9), le module de traitement étant configuré pour convertir la mesure délivrée par le capteur (9) en une donnée représentative de l'état de charge du SST .

4. SST selon l'une quelconque des revendications précédentes dans lequel le MCP est un MCP solide / liquide.

5. SST selon l'une quelconque des revendications précédentes comprenant un échangeur thermique configuré pour plonger au moins partiellement dans la cuve (1) et destiné à assurer la circulation d'un fluide caloporteur et le transfert thermique sans contact entre le MCP (2) et le fluide caloporteur

6. SST selon l'une quelconque des revendications précédentes dans lequel le système de circulation de gaz comprend un circuit de circulation du gaz (27) en dehors de la cuve (1), assurant la connexion fluidique entre la borne supérieure (20) et la borne inférieure (21),

**7.** SST selon l'une quelconque des revendications précédentes dans lequel le système de circulation de gaz comprend un dispositif de régulation du débit (13; 18; 19) de gaz injecté dans la cuve (1), préférentiellement configuré pour assurer un débit de gaz constant.

**8.** SST selon l'une quelconque des revendications précédentes dans lequel le système de circulation de gaz comprend un dispositif de régulation de la pression (12) du gaz injecté dans la cuve (1) avantageusement configuré pour que la pression du gaz injecté dans la cuve (1) soit supérieure à la perte de charge subie par le gaz traversant le MCP (2) dans la cuve (1).

**9.** SST selon l'une quelconque des revendications précédentes dans lequel le système de circulation de gaz comprend un dispositif de mise en circulation du gaz (11) dans ledit circuit (27).

**10.** SST selon l'une quelconque des revendications précédentes dans lequel le système de circulation de gaz comprend un réservoir (8) destiné à stocker du gaz.

**11.** Procédé d'évaluation du niveau de charge du SST selon l'une quelconque des revendications précédentes **caractérisé en ce qu'**il comprend les étapes suivantes

- injection d'un gaz dans la cuve (1) au niveau d'une borne inférieure (21), préférentiellement à débit constant et avec une pression prédéfinie,
- acquisition de manière répétée d'une mesure représentative de la perte de charge du gaz injecté traversant le MCP (2) entre la borne inférieure (21) et une borne supérieure (20) de la cuve (1),
- traitement de la mesure acquise à l'étape précédente pour évaluer l'évolution de la perte de charge entre la borne supérieure (20) et la borne inférieure (21) et déterminer le niveau de charge du SST.

**12.** Procédé selon la revendication précédente dans lequel la mesure représentative est une mesure de la pression différentielle du gaz entre la borne inférieure (21) d'injection du gaz dans la cuve (1) et la borne supérieure (20) d'évacuation du gaz.

**13.** Procédé selon l'une quelconque des deux revendications précédentes dans lequel l'acquisition de la mesure est répétée toutes les 1 à 20 secondes.

**14.** Procédé selon l'une quelconque des trois revendications précédentes dans lequel le traitement de la mesure délivrée par le capteur (9) comprend :

- une étape de filtrage des mesures par différence entre des mesures de perte de charge moyennées et une mesure ponctuelle de perte de charge.
- une comparaison de cette différence avec une première valeur de seuil et une deuxième valeur de seuil, * quand la différence est comprise entre la première valeur de seuil et la deuxième valeur de seuil, le dispositif d'évaluation de l'état de charge détermine que le MCP est à l'état liquide, * quand la différence est inférieure à la première valeur de seuil, le traitement se poursuit par
- une étape de dérivation de la mesure de perte de charge en fonction du temps, * quand la dérivée est différente à 0, le dispositif d'évaluation de l'état de charge détermine que le MCP est en cours de cristallisation, * quand la dérivée est égale à 0, le dispositif d'évaluation du niveau de charge détermine que le MCP est cristallisé correspondant à un état déchargé du SST.

**Patentansprüche**

**1.** System zur Wärmespeicherung (WSS) mittels Phasenwechselmaterial, das einen Behälter (1), der dazu bestimmt ist, ein PCM (2) aufzunehmen, und eine Vorrichtung zur Ermittlung des Ladezustands des WSS umfasst, **dadurch gekennzeichnet, dass** die Vorrichtung zur Ermittlung des Ladezustands des WSS umfasst

- ein System zum Umwälzen eines Gases durch das PCM (2), welches umfasst:

  ◦ eine Vorrichtung zum Einspritzen des Gases (6) in den Behälter (1) in Kontakt mit dem PCM (2) auf Höhe eines unteren Anschlusses (21),
  ◦ eine Vorrichtung zum Ausleiten des Gases (7) aus dem Behälter (1) auf Höhe eines oberen Anschlusses (20), und

- einen Sensor (9), der so ausgelegt ist, dass er eine Messung liefert, die für die Entwicklung des Druckverlustes des eingespritzten Gases, das das PCM (2) zwischen dem unteren Anschluss (21) und dem oberen Anschluss (20) durchströmt, repräsentativ ist und vom Kristallisationszustand des PCM (2) abhängig ist, sodass die Entwicklung des Druckverlustes für den Ladezustand des WSS repräsentativ ist.

2. WSS nach dem vorstehenden Anspruch, wobei es sich beim Sensor um ein Manometer (9) handelt, das so ausgelegt ist, dass es einen Differenzdruck des Gases zwischen dem unteren Anschluss (21) und dem oberen Anschluss (20) misst.

3. WSS nach einem der vorstehenden Ansprüche, wobei die Vorrichtung zur Ermittlung des Ladezustands des WSS ein Modul zur Verarbeitung mindestens der vom Sensor (9) gelieferten Messung umfasst, wobei das Verarbeitungsmodul so ausgelegt ist, dass es die vom Sensor (9) gelieferte Messung in eine Datenangabe umwandelt, die für den Ladezustand des WSS repräsentativ ist.

4. WSS nach einem der vorstehenden Ansprüche, wobei es sich beim PCM um ein Fest-/Flüssig-PCM handelt.

5. WSS nach einem der vorstehenden Ansprüche, das einen Wärmetauscher umfasst, der so ausgelegt ist, dass er mindestens teilweise in den Behälter (1) eintaucht, und dazu bestimmt ist, die Umwälzung eines Wärmeträgerfluids und die Wärmeübertragung ohne Kontakt zwischen dem PCM (2) und dem Wärmeträgerfluid sicherzustellen.

6. WSS nach einem der vorstehenden Ansprüche, wobei das Gasumwälzsystem einen Umwälzkreis für das Gas (27) außerhalb des Behälters (1) umfasst, der die Fluidverbindung zwischen dem oberen Anschluss (20) und dem unteren Anschluss (21) sicherstellt.

7. WSS nach einem der vorstehenden Ansprüche, wobei das Gasumwälzsystem eine Vorrichtung zum Regeln der Strömung (13; 18; 19) von in den Behälter (1) eingespritztem Gas umfasst, die vorzugsweise so ausgelegt ist, dass sie eine konstante Gasströmung sicherstellt.

8. WSS nach einem der vorstehenden Ansprüche, wobei das Gasumwälzsystem eine Vorrichtung zum Regeln des Drucks (12) des in den Behälter (1) eingespritzten Gases umfasst, die vorteilhafterweise so ausgelegt ist, dass der Druck des in den Behälter (1) eingespritzten Gases höher ist als der Druckverlust, den das Gas, das das PCM (2) im Behälter (1) durströmt, erfährt.

9. WSS nach einem der vorstehenden Ansprüche, wobei das Gasumwälzsystem eine Vorrichtung zum Umwälzen des Gases (11) im Kreis (27) umfasst.

10. WSS nach einem der vorstehenden Ansprüche, wobei das Gasumwälzsystem einen Tank (8) umfasst, der dazu bestimmt ist, Gas zu speichern.

11. Verfahren zur Ermittlung des Ladezustands des WSS nach einem der vorstehenden Ansprüche, **dadurch gekennzeichnet, dass** es die folgenden Schritte umfasst

- Einspritzen eines Gases in den Behälter (1) auf Höhe eines unteren Anschlusses (21), vorzugsweise mit konstanter Strömung und mit einem vordefinierten Druck,
- wiederholtes Erfassen einer Messung, die für den Druckverlust des eingespritzten, das PCM (2) durchströmenden Gases zwischen dem unteren Anschluss (21) und einem oberen Anschluss (20) des Behälters (1) repräsentativ ist,
- Verarbeitung der im vorstehenden Schritt erfassten Messung, um die Entwicklung des Druckverlustes zwischen dem oberen Anschluss (20) und dem unteren Anschluss (21) zu ermitteln und den Ladezustand des WSS zu bestimmen.

12. Verfahren nach dem vorstehenden Anspruch, wobei es sich bei der repräsentativen Messung um eine Messung des Differenzdrucks des Gases zwischen dem unteren Anschluss (21) zum Einspritzen des Gases in den Behälter (1) und dem oberen Anschluss (20) zum Austragen des Gases handelt.

13. Verfahren nach einem der zwei vorstehenden Ansprüche, wobei das Erfassen der Messung alle 1 bis 20 Sekunden wiederholt wird.

14. Verfahren nach einem der drei vorstehenden Ansprüche, wobei die Verarbeitung der vom Sensor (9) gelieferten Messung umfasst:

- einen Schritt des Filterns der Messungen nach Differenz zwischen gemittelten Druckverlustmessungen und einer punktuellen Druckverlustmessung,
- ein Vergleichen dieser Differenz mit einem ersten Schwellenwert und einem zweiten Schwellenwert, * wenn die Differenz zwischen dem ersten Schwellenwert und dem zweiten Schwellenwert liegt, die Vorrichtung zur Ermittlung des Ladezustands bestimmt, dass sich das PCM im flüssigen Zustand befindet, * wenn die Differenz kleiner ist als der erste Schwellenwert, die Verarbeitung fortgesetzt wird mit
- einem Schritt der Ableitung der Druckverlustmessung in Abhängigkeit von der Zeit, * wenn die Ableitung ungleich 0 ist, die Vorrichtung zur Ermittlung des Ladezustands bestimmt, dass sich das PCM in Kristallisation befindet, * wenn die Ableitung gleich 0 ist, die Vorrichtung zur Ermittlung des Ladezustands bestimmt, dass das PCM kristallisiert ist, was einem entladenen Zustand des WSS entspricht.

**Claims**

1. Phase Change Material Thermal Storage System (TSS) comprising a tank (1) intended to receive a PCM (2), and a device for evaluating the charge level of the TSS, **characterised in that** the device for evaluating the charge level of the TSS comprises

    - a system for circulating a gas through the PCM (2) comprising:

        ∘ a device for injecting gas (6) in the tank (1) in contact with the PCM (2) at the level of a lower terminal (21),
        ∘ a device for exiting the gas (7) outside of the tank (1) at the level of an upper terminal (20), and

    - a sensor (9) configured to deliver a measure representative of the evaluation of the charge loss of the injected gas passing through the PCM (2) between the lower terminal (21) and the upper terminal (20) and according to the crystallisation state of the PCM (2) such that the evolution of the charge loss is representative of the charge level of the TSS.

2. TSS according to the preceding claim, wherein the sensor is a manometer (9) configured to measure a differential pressure of the gas between the lower terminal (21) and the upper terminal (20).

3. TSS according to any one of the preceding claims, wherein the device for evaluating the charge level of the TSS comprises a module for treating at least the measure delivered by the sensor (9), the treatment module being configured to convert the measure delivered by the sensor (9) into an item of data representative of the charge state of the TSS.

4. TSS according to any one of the preceding claims, wherein the PCM is a solid/liquid PCM.

5. TSS according to any one of the preceding claims comprising a heat exchanger configured to immerse at least partially into the tank (1) and intended to ensure the circulation of a heat-transfer fluid and the contactless heat transfer between the PCM (2) and the heat-transfer fluid.

6. TSS according to any one of the preceding claims, wherein the gas circulation system comprises a circuit for circulating the gas (27) outside of the tank (1), ensuring the fluid connection between the upper terminal (20) and the lower terminal (21).

7. TSS according to any one of the preceding claims, wherein the gas circulation system comprises a device for regulating the flow (13; 18; 19) of gas injected into the tank (1), preferably configured to ensure a constant gas flow.

8. TSS according to any one of the preceding claims, wherein the gas circulation system comprises a device for regulating the pressure (12) of the gas injected into the tank (1) advantageously configured such that the pressure of the gas injected into the tank (1) is greater than the charge loss suffered by the gas passing through the PCM (2) into the tank (1).

9. TSS according to any one of the preceding claims, wherein the gas circulation system comprises a device for circulating the gas (11) in said circuit (27).

10. TSS according to any one of the preceding claims, wherein the gas circulation system comprises a reservoir (8) intended to store the gas.

11. Method for evaluating the charge level of the TSS according to any one of the preceding claims, **characterised in that** it comprises the following steps

   - injection of a gas into the tank (1) at the level of a lower terminal (21), preferably at a constant flow and with a predefined pressure,
   - repeated acquisition of a measure representative of the charge loss of the gas injected passing through the PCM (2) between the lower terminal (21) and an upper terminal (20) of the tank (1),
   - treatment of the measure acquired in the preceding step to evaluate the evolution of the charge loss between the upper terminal (20) and the lower terminal (21) and to determine the charge level of the TSS.

12. Method according to the preceding claim, wherein the representative measure is a measure of the differential pressure of the gas between the lower terminal (21) for injecting the gas into the tank (1) and the upper terminal (20) for evacuating the gas.

13. Method according to any one of the two preceding claims, wherein the acquisition of the measure is repeated every 1 to 20 seconds.

14. Method according to any one of the three preceding claims, wherein the treatment of the measure delivered by the sensor (9) comprises:

   - a step of filtering the measures by difference between the average measures of charge loss and a one-off measure of charge loss,
   - a comparison of this difference with a first threshold value and a second threshold value, * when the difference is comprised between the first threshold value and the second threshold value, the device for evaluating the charge state determines that the PCM is in the liquid state, * when the difference is less than the first threshold value, the treatment is continued by
   - a step of derivation of the measure of charge loss over time, * when the derivation is different to 0, the device for evaluating the charge state determines that the PCM is undergoing crystallisation, * when the derivation is equal to 0, the device for evaluating the charge level determines that the PCM is crystallised corresponding to a discharged state of the TSS.

FIG. 1

FIG. 2

FIG. 3

FIG. 4

EP 3 628 958 B1

FIG. 5

EP 3 628 958 B1

FIG. 6

EP 3 628 958 B1

EP 3 628 958 B1

FIG. 7

**EP 3 628 958 B1**

## RÉFÉRENCES CITÉES DANS LA DESCRIPTION

**Documents brevets cités dans la description**

- EP 2482021 A2

**Littérature non-brevet citée dans la description**

- **G. STEINMAURER et al.** Development of sensors for measuring the enthalpy of PCM storage systems. laboratoire autrichien ASiC